# EUROPEAN PATENT SPECIFICATION

(11) **EP 2 230 864 B1**
(45) Date of publication and mention of the grant of the patent: **08.01.2020**
(21) Application number: 09290198.2
(22) Date of filing: 17.03.2009
(51) Int. Cl.: H04W 24/08, H04W 84/04, H04W 84/10

(54) **FAULT DETECTION AMONG BASE STATIONS**
FEHLERERKENNUNG UNTER BASISSTATIONEN
DÉTECTION DE FAUTES DANS DES STATIONS DE BASE

(43) Date of publication of application: 22.09.2010
(73) Proprietor: Alcatel Lucent, 91620 Nozay (FR)
(72) Inventor: Portolan, Michele, Trim, Co. Meath (IE); Claussen, Holger, Lydiard Millicent Swindon AN5 3NJ (GB); Ho, Lester Tse Wee, Swindon Wiltshire SN5 5GD (GB); Goyal, Suresh, Somerset, NJ 07059 (US); Samuel, Louis Gwyn, Castlepark Road Dublin (IE)
(74) Representative: Nokia EPO representatives

(56) References cited:
- EP-A2- 1 641 182
- WO-A1-99/33297
- WO-A1-2009/031959
- BRIAN QUANZ ET AL: "Determining Object Safety Using a Multiagent, Collaborative System" SELF-ADAPTIVE AND SELF-ORGANIZING SYSTEMS WORKSHOPS, 2008. SASOW 2008. SECOND IEEE INTERNATIONAL CONFERENCE ON, IEEE, PISCATAWAY, NJ, USA, 20 October 2008 (2008-10-20), pages 25-30, XP031436758 ISBN: 978-0-7695-3553-1

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver (transceiver") of the femtocell base station to the core network. The DSL allows voice calls and other services provided via the femtocell base station to be supported. The femtocell base station also includes a radio frequency (RF) transceiver connected to an antenna for radio communications.

Femtocell base stations are sometimes referred to as femtos.

Traditional known approaches to fault management of base stations involve human interventions. These are unsuitable for femtocell base stations for two reasons. Firstly, femtocell base stations are low cost and hence less reliable that other larger base stations. Secondly, there are many femtocell base stations in a network, for example hundreds of thousands of femotcell base stations distributed according to the preferences of the subscribers who purchase them. Accordingly, there arc too many for practical human intervention in fault management.

Some schemes for remote monitoring of femtocell base stations are known, in which remote monitoring is undertaken through the backhaul, namely the DSL line. These schemes are basically for management of the DSL modem of the femtocell base station, the DSL modem being attached to the DSL line. These schemes involve detection of whether the DSL modem stops responding and remote reset of the femtocell base station that includes the DSL modem that fails to respond. This is satisfactory for fault management of such modems, because the failure results, at worst in interruption of service to subscribers currently call-connected to the femtocell base station. However, such known approaches are unsatisfactory in dealing with faults in radio transmission by the femtocell base station, as in this case unpredicted faulty behaviour can harm the operation of neighbouring base stations, be they femtocell base stations or other base stations, and hence the network itself. This gives rise to security and reliability concerns.

European Patent Publication EP-A-1641182 and International (P.C.T.) Patent Publications WO 2009/031959 and WO 99/33297 provide background. It is known from WO 2009/031959 to provide a method of detecting a fault in a base station among a group of neighbouring base stations comprising:
a first base station detecting possible faulty operation of a base station;
the first base station instructing other base stations that are neighbours of the base station detected as possibly faulty to monitor that base station and to report whether they also detect the fault;
upon at least one of said neighbours also detecting the fault and so reporting, it being decided that the fault is confirmed.

### Summary

The present invention is characterised over the disclosure of WO 2009/031959 in that the first base station makes the decision that the fault is confirmed, the base stations are femtocell base station, the femtocell base stations are each connected via a respective interface for wireline connection to the internet, the fault is loss of wireline connection, and one of the neighbours of the femtocell base station detected as possibly faulty receives information of the fault at its wireline interface and acts as a wireless backhaul bridge to the femtocell base station detected as faulty.

The reader is referred to the appended independent claims. Some preferred features are laid out in the dependent claims.

An example of the present invention is a method of detecting a fault in a base station among a group of neighbouring base stations. The method comprises:
a first base station detecting possible faulty operation of a base station; the first base station instructing other base stations that are neighbours of the base station detected as possibly faulty to monitor that base station and to report whether they also detect the fault; upon at least one of said neighbours also detecting the fault and so reporting, the first base station deciding that the fault is confirmed.

In preferred embodiments, distributed and automated fault managements is provided in a network of femtocell base stations is provided. Preferably, femtocell base stations are configured to collaborate with neighbours in detecting faults, and may be configured to decide which will seek to remedy the fault. As central fault management is not required, there is less non-payload related traffic, such as control signalling to and from a central fault management node in the network.

Central fault management may be provided additionally, as a back up.

Another example of the present invention is a femtocell base station comprising a fault management stage configured to, in use, detect a fault in a neighbouring femtocell base station and to receive information of the fault as detected by a further femtocell base station neighbouring the suspected faulty femtocell base station. This is so as to confirm that the fault has occurred.

### Brief Description of the Drawings

Embodiments of the present invention will now be described by way of example and with reference to the drawings, in which:
Figure 1 is a diagram illustrating a network for wireless communications according to a first embodiment of the invention,
Figure 2 is a diagram illustrating a femtocell base station as shown in the network of Figure 1,
Figure 3 is a schematic diagram illustrating cooperative operation of a group of neighbouring femtocell base stations,
Figure 4 is a flowchart illustrating the cooperative operation in more detail,
Figure 5 is a diagram illustrating the core network shown in Figure 5, and
Figure 6 is a diagram illustrating a femtocell base station according to a second embodiment of the invention.

### Detailed Description

We now describe a network including femtocell base stations then look in greater detail at a femtocell base station and the relevant operation of the femtocell base stations.

### Network

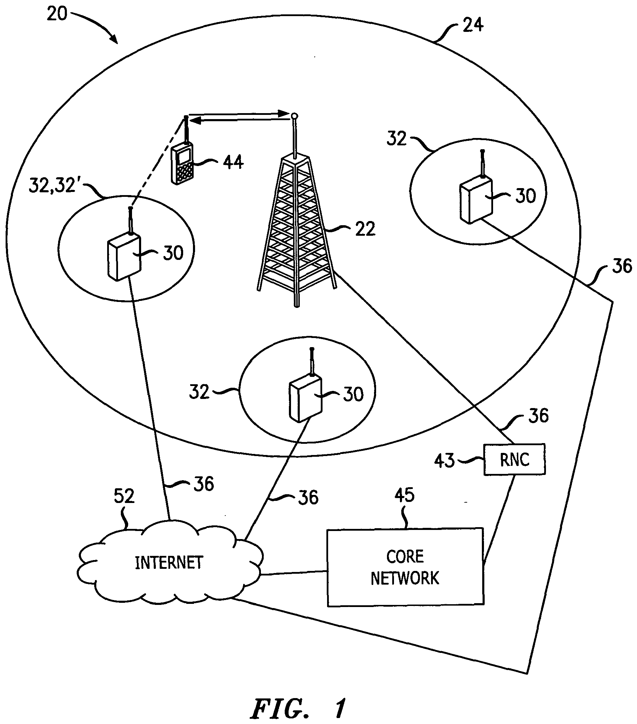

As shown in Figure 1, in one communication network 20, there are two types of base stations (often denoted BS or BSs) : macrocell base stations and femtocell base stations. One macrocell base station 22 for wireless telecommunications is shown for simplicity in Figure 1. The macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's home. In Figure 1, three femtocell base stations 30 and corresponding femtocells 32 are shown for simplicity.

It is possible for a mobile terminal 44 within the macrocell 24 to communicate with the macrocell base station 22 in known manner. When the mobile terminal 44 enters into a femtocell 32 for which the mobile terminal is registered for communications within the femtocell base station 30, it is desirable to handover the connection with the mobile terminal from the macrocell to the femtocell. In the example shown in Figure 1, the user of mobile terminal 44 is a preferred user of the nearest 32' of the femtocells 32.

As shown in Figure 1, the femtocell base stations 30 are connected via broadband Internet Protocol connections ("backhaul") 36 to the Internet 52. The macrocell base station 22 is connected via a radio network controller, RNC, 43 to the macrocell core network 45, which in this example is a Universal Mobile Telecommunications System (UMTS) core network.

### Fault-aware femtocell base stations

Femtocell base stations 30 are user-deployed, often denoted plug-and-play. Upon deployment, the femtocell base stations automatically integrate themselves into the existing ("underlay") of a network of macrocells. The femtocell base stations are autoconfiguring in the sense of being provided an initial set of parameter values enabling operation, for example transmission signal strengths, scrambling codes and power limits. Also they are self-optimising, in the sense of dynamically adjusting to received data such as of received signal strength and interference level, for example to optimise transmit signal strength and update soft/softer handover neighbour lists.

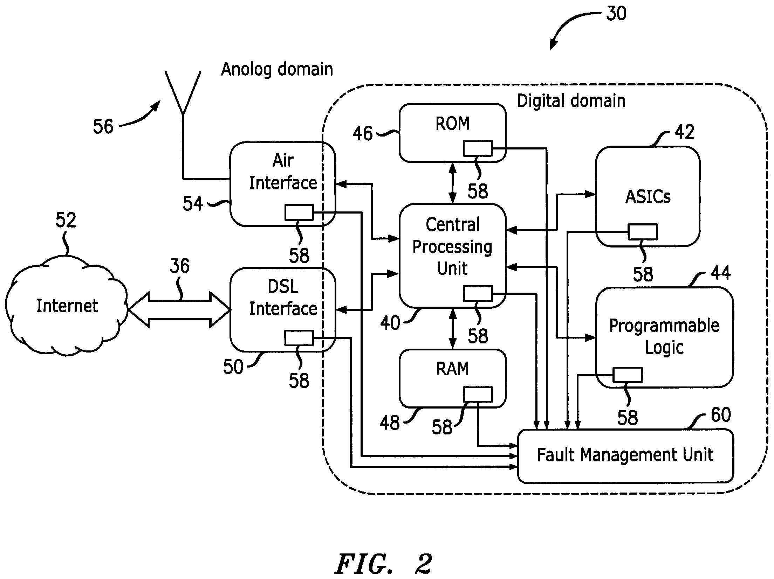

As shown in Figure 2, a femtocell base station 30 includes a central processing unit (CPU) 40 connected to an assembly 42 of Application Specific Integrated Circuits ASICs, a Programmable Logic circuit 44, a Read- only memory (ROM) 46 and a random access memory 48. The CPU 40 is also connected to a Digital Subscriber Line (DSL) modem 50 which provides the broadband Internet Protocol connection 36 to the Internet 52. The CPU is also connected to the air interface 54, which is a radio transmitter-receiver, connected to a radio antenna 56.

Each of the CPU 40, ASICs assembly 42, Programmable Logic circuit 44, ROM 46, RAM 48, DSL modem 50 and air interface 54 includes a respective fault detection/correction circuit 58. The fault detection/correction circuits 58 are each connected to a fault management unit 60. The fault management unit applies fault management policies by controlling femtocell base station operations in fault detection and correction. For example, in the event of a fault being detected, the fault management unit 60 instructs the femtocell base station 30 to inform neighbouring femtocell base stations (not shown in Figure 2) of the fault detection.

The DSL modem 50 enables communication through the backhaul connection 36 to other femtocell base stations 30, for example so as to signal that a fault is detected and receive instructions and requests.

### Cooperation between femtocell base stations in distributed fault management

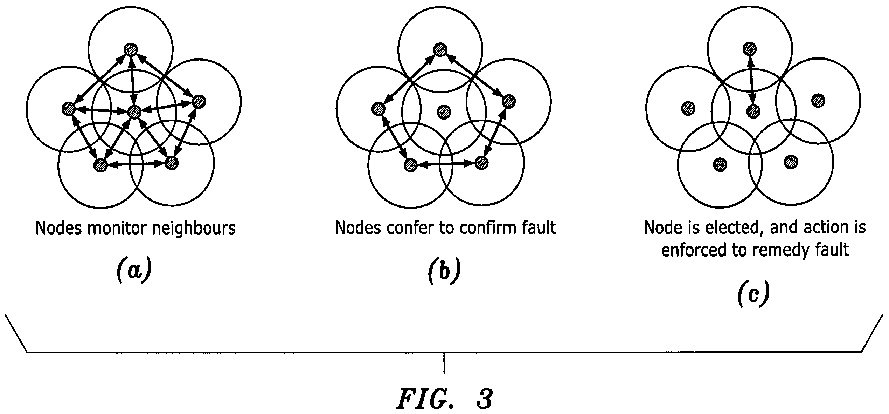

As fault management is distributed among the femtocell base stations, they communicate with each other for fault detection and repair. As shown schematically in Figure 3, the femtocell base stations cooperate in identifying and remedying faults, by (i) femtocell base stations monitoring their neighbours, (ii) the femtocell base stations conferring to confirm a fault, and (iii) the femtocell base stations selecting a neighbour to act to remedy the fault. This is described in more detail below.

Femtocell base stations in the group of neighbouring femtocell base stations monitor each other periodically by wireline communication, namely via their respective DSL modem and corresponding DSL backhaul connection. These use a known device-to-device diagnosis protocol, namely IJTAG. IJTAG denotes Instrument Joint Test Action Group, which is a telecommunications standard in respect of procedures for testing hardware. Each femtocell base station in the group has previously performed a neighbour discovery procedure (for example involving transmitting queries and receiving responses) so are aware of their respective femtocell base station neighbours.

In this embodiment, each femtocell base station communicates with its neighbours via its DSL modem and corresponding DSL backhaul connection. In other similar embodiments, femtocell base stations may also communicate with their neighbours via their respective air interface.

If a femtocell detects a fault with a neighbouring base station, then the femtocell initiates collaboration amongst its neighbours that can monitor the suspected faulty femtocell base station; the first step being to build confidence that there really is a fault. Accordingly, the femtocell base station seeks confirmation from its neighbours that they also see the fault. Assuming sufficient confirmation is obtained that the fault occurred then one of the collaborating femtocell base stations is selected and authorised using IJTAG to perform an operation to remedy the fault.

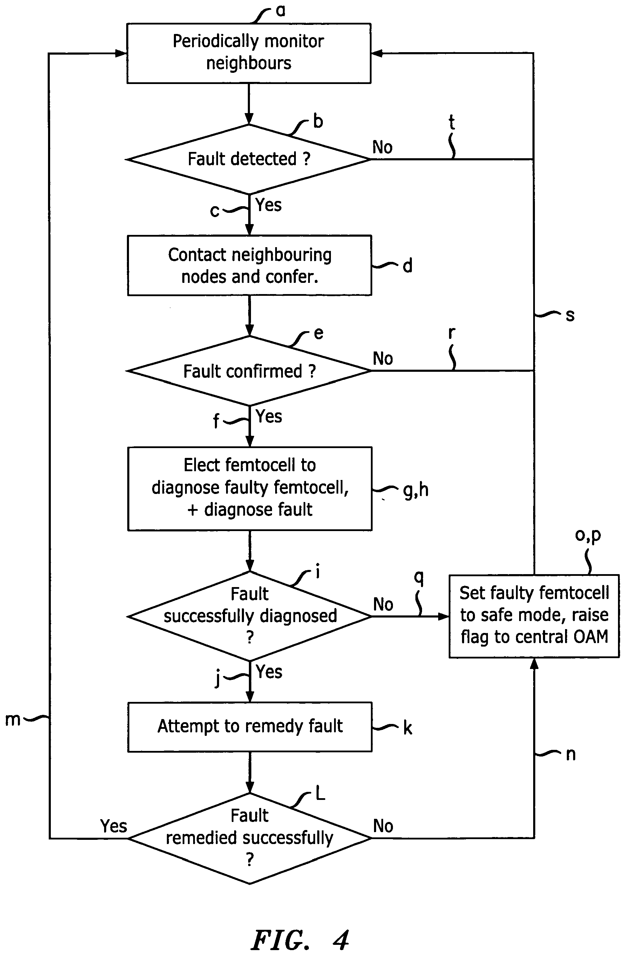

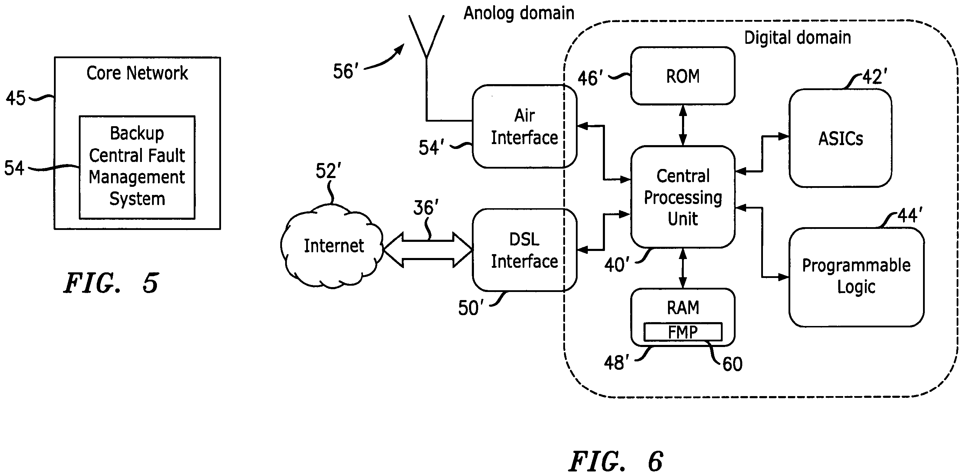

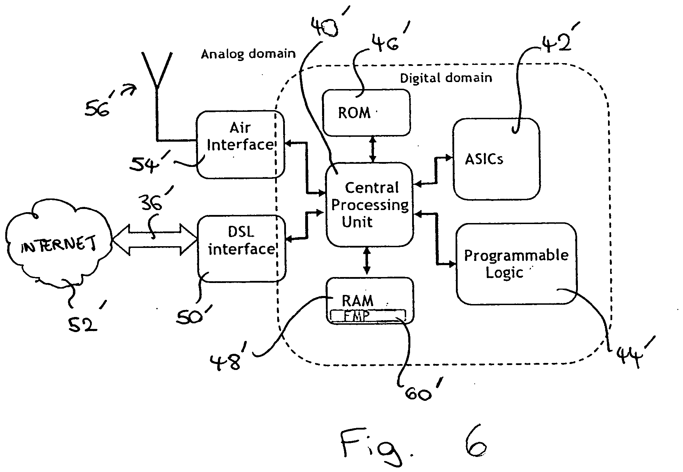

This fault management process is described in further detail below with reference to Figures 4 and 5.

As shown in Figure 4, each femtocell base station monitors (step a) its neighbours by periodic query-response signalling or by periodically taking measurements of the quality of radio signals transmitted by the neighbours. This is to determine whether a fault is detected (step b). Query-response signalling is where a femtocell base station transmits a query message and a neighbour responds to by transmitting a response that is detected by the femtocell base station that sent the query message.

Upon a fault being detected (step c), the femtocell base station detecting the fault confers (step d) with its neighbours by appropriate messaging via their DSL backhaul connections. This is to decide (step e) whether or not the fault is confirmed by neighbours. If an appropriate number of the neighbours agree on the basis that they also detected the fault, then the fault is confirmed (step f).

There is then a negotiation process (step g) involving negotiation between the femtocell base stations that have detected the fault regarding which of the neighbouring femtocell base stations that have detected the fault will attempt to diagnose (and possibly remedy) the fault. The selected neighbouring femtocell base station then seeks to diagnose (step h) the fault.

A determination is then made (step i) as to whether diagnosis was successful. If yes (step j), that neighbour femtocell base station attempts (step k) to remedy the fault. A determination is then made (step *l*) whether the remedy was successful. If successful, a return is made (step m) to the state of the femtocells in this group periodically monitoring (step a) their neighbours.

On the other hand, if the remedy is not successful (step n), the femtocell in respect of which the fault was detected is made safe (step o) by being transferred into a safe mode and a flag is sent (step p) to a central fault management system requesting that the central fault management system seek to handle the fault. This flag is a request for centralised fault management, as described later below with reference to Figure 5. Centralised fault management is a fall-back approach taken if the above-mentioned distributed fault management fails.

Also, if, at the earlier step i, it is determined that the fault is not successfully diagnosed (step q), then a flag is sent to a back-up central fault management system requesting that that system seeks to handle the fault. The central fault management system is described in more detail below.

For completeness, we mention that if, at earlier step e, it is determined that the fault is not confirmed (step r) by a predetermined number of neighbours, then a return (step s) is made to periodically monitoring of the neighbours (step a). Also, of course if no fault is detected at step b a return is made (step t) to periodic monitoring (step a).

### Typical types of faults

Various type of faults are possible; here are some examples:
A typical fault might be for the femtocell base station to be stuck at maximum transmit power, in which case the remedy is to cut power to the femtocell base station.

Another possible fault is failure of a femtocell base station to transmit; the remedy being for one or more neighbours increasing their coverage so as to fill the "coverage gap".

Another common fault is loss of the DSL backhaul connection. The invention remedies this loss by having the neighbouring femtocell base station selected to remedy the situation to temporarily act as a wireless backhaul "bridge" to the faulty femtocell base station.

Another possible fault is for a femtocell base station to become unresponsive due to a software failure. The remedy is for the appropriate neighbour to instruct a reboot of the faulty femtocell base station.

In an extreme case, a faulty femtocell base station can become "rogue" so as to be a source of problems or instability in the network. In such a case, the remedy is, for example, a request to be sent to the faulty femtocell base station for voluntary interruption by the femtocell base station of its DSL backhaul or for high-priority forced shutdown of the femtocell base station.

### Centralised Fault Management for use as a back-up to distributed fault management

As shown in Figure 5, the core network 45 includes a central fault management system 54 which is provided as a back-up, in case the fault cannot be remedied or substantially ameliorated using the distributed fault management method described above with reference to Figures 3 and 4. This might happen in the event of a severe hardware failure or when the faulty femtocell base station lacks neighbours in proximity.

In this example, the central fault management system 52 is part of the systems for wireless network management, namely the Home Network Management (HNM) system, and the protocol used to communicate with the base stations including the femtocell base station base stations is TR069 protocol, also known as Customer-Premises Equipment (CPE) Wide Area Network (WAN) Management Protocol (CWMP).

The method of central fault management is that fault detection information is provided, by or in respect of the faulty femtocell base station, to the central fault management system 54. This processes the information, and sends reconfiguration commands to the femtocell base station, mainly via one or more of the following routes:
(i) Via the Internet 52 and appropriate DSL backhaul 36 direct to the faulty femtocell base station,
(ii) Via the Internet 52 and appropriate DSL backhaul 36 directly to a neighbouring femtocell base station which then forwards the commands over air (this can be considered hopping through the neighbour),
(iii) Via the Internet 52 and appropriate DSL backhaul 36 directly to the macrocell base station in which the faulty femtocell resides; the macrocell base station then forwards the commands over air (this can be considered hopping through the macrocell) to the faulty femtocell base station.

Due to the important and sensitive nature of such messages, they are encapsulated cryptographically and sender authentication is required.

Particularly where the faulty femtocell appears to have a faulty DSL backhaul connection, communications are passed via one or both of the neighbour femtocell base station and macrocell base station so as to be received over air by the faulty femtocell base station, in order to test and monitor the suspected faulty femtocell base station. Where the DSL backhaul connection seems to be working acceptably, direct connection via the Internet 52 and appropriate DSL backhaul 36 direct to the faulty femtocell base station is preferred so as to avoid use of limited radio resources for such a purpose.

In an alternative example, the central fault management system is part of systems for managing the DSL backhaul, for example an NA5530 network analyser and the protocol used to communicate with the base stations including the femtocell base stations is Simple Network Management Protocol, SNMP. In this alternative example, the central fault management system processes the information, and sends reconfiguration commands to the femtocell base station, via one or more of the following routes: (i) Via the Internet and appropriate DSL backhaul direct to the faulty femtocell base station, (ii) via the Internet and appropriate DSL backhaul directly to a neighbouring femtocell base station which then forwards the commands over air; and (iii) via the Internet and appropriate DSL backhaul directly to the macrocell base station in which the faulty femtocell resides, the macrocell base station then forwarding the commands over air to the faulty femtocell base station.

In some embodiments, the back-up central fault management system is provided in the form of an Operations and Management (OAM) system.

In some embodiments, the central fault management system is used to collect statistics about faults resolved using the distributed fault management described earlier above.

In some other embodiments, femtocell base stations communicate with their neighbour femtocell base stations via their air interfaces, instead of, or in addition to, via their DSL backhaul connections.

In some embodiments the neighbours detect a fault in a first femtocell base station by undertaking specific monitoring, for example by periodic query-response (i.e. active) monitoring, or by periodically taking measurements of the quality of radio signals transmitted by the neighbours. This can be in addition to, or instead of internal fault detection by the first femtocell base station itself. In other words, neighbouring femtocell base stations can monitor themselves and each other, or alternatively in some embodiments, just each other.

### Other femtocell base station architectures

The femtocell base station shown in Figure 2 includes fault detection/correction circuits that are hardware, in otherwise similar embodiments, corresponding functionality is provided at least partially by software.

As shown in Figure 6, a femtocell base station 30' includes a central processing unit (CPU) 40' connected to an assembly 42' of ASICs, a Programmable Logic circuit 44', a Read- only memory (ROM) 46 and a random access memory (RAM) 48'. The CPU 40 is also connected to a Digital Subscriber Line (DSL) modem 50' which provides the broadband Internet Protocol connection 36' to the Internet 52'. The CPU is also connected to the air interface 54', which is a radio transmitter-receiver, connected to a radio antenna 56'.

As shown in Figure 6, software-based fault management is provided by a fault management program (FMP) 60' that is stored in the RAM 48' and executed by the CPU 40'. The behaviour of the various femtocell base station components, namely CPU, ASIC, ROM,RAM, Programmable Logic and ASICs are monitored to detect anomalies in behaviour. This has the advantages of being lightweight and simpler in construction tha the hardware approach. Of course, some of the CPU power is used in fault management.

Some femtocell base stations can be considered as being a hybrid of the hardware base approach described with reference to Figure 2 and the software-based approach described with reference to Figure 6. In one such example, the Programmable Logic 44' is implemented using programmable logic such as Field Programmable Gate Arrays (FPGAs) which are programmed to include some Design-For-Test (DFT) features enabling signalling of faults to the fault management program FHP 60. Upon a fault being detected to be remedied in that femtocell base station, the FMP 60 requests the CPU 40' to reprogram the FGPAs of the Programmable Logic 44' to a fault-free state.

Femtocell base stations can be implemented in various ways, for example, with different types of Application Specific Integrated Circuits ASICs, Programmable Logic (typically implemented as Field Programmable Gate Arrays), RAM (for example SRAMs Static Random Access Memory and DRAMs Dynamic Random Access Memory), and ROMs. In some embodiments, rather than the CPU being a single unit, it can be implemented as an array of processors. In some embodiments connectors may be grouped in one or more data busses; in others they may be independent point-to-point connections. In some embodiments the functionality of the CPU can be provided in a distributed way in other components, for example one or more ASICs can be equipped with Direct Memory Access (DMA) units so as to directly access the Random Access Memory.

In the example shown in Figure 2, a femtocell base station includes a central processing unit (CPU) connected to an assembly of Application Specific Integrated Circuits ASICs, a Programmable Logic circuit, a Read- only memory (ROM) and a random access memory. The CPU is also connected to a Digital Subscriber Line (DSL) modem which provides the broadband Internet Protocol connection to the Internet. The CPU is also connected to the air interface, which is a radio transmitter-receiver, connected to a radio antenna. In some other embodiments, not all of these elements are present, whilst in some other embodiments there may be multiples of elements (e.g. RAMs, ROMs and/or CPUs).

In the example described with reference to Figure 4, each femtocell base station monitors (step a) its neighbours by periodic query-response signalling or by periodically taking measurements of the quality of radio signals transmitted by the neighbours. This can be considered as direct monitoring. In another otherwise similar embodiment (not shown), the femtocell base stations also implement indirect monitoring where predetermined or unusual patterns in behaviour may trigger such direct monitoring. This would have the advantage of reducing the number of monitoring operations overall.

The present invention may be embodied in other specific forms without departing from its essential characteristics. The described embodiments are to be considered in all respects only as illustrative and not restrictive. The scope of the invention is defined by the appended independent claims.

## Claims

1. A method of detecting a fault in a base station (30) among a group of neighbouring base stations comprising:
a first base station detecting (Fig 4:b) possible faulty operation of a base station;
the first base station instructing (Fig 4:d) other base stations that are neighbours of the base station detected as possibly faulty to monitor that base station and to report whether they also detect the fault;
upon at least one of said neighbours also detecting (Fig 4:e) the fault and so reporting (Fig.4:f), it being decided that the fault is confirmed,
wherein the first base station makes the decision that the fault is confirmed, the base stations (30) are femtocell base stations, the femtocell base stations are each connected via a respective interface (50) for wireline connection to the internet (52), the fault is loss of wireline connection, and one of the neighbours of the femtocell base station detected as possibly faulty receives information of the fault at its wireline interface and acts as a wireless backhaul bridge to the fcmtocell base station detected as faulty.

2. The method according to claim 1, further comprising the step of instructing (Fig.4:k) at least one of said neighbours to attempt to remedy that fault.

3. A method according to claim 1 or claim 2, in which the femtocell detected as possibly faulty by the first base station is a femtocell base station other than the first femtocell base station.

4. A method according to claim 1 or claim 2, in which the femtocell detected as possibly faulty by the first base station is said first femtocell base station.

5. A femtocell base station (30) comprising a fault management stage (60) configured to in use detect a fault in a neighbouring femtocell base station and to receive information of the fault as detected by a further femtocell base station neighbouring the suspected faulty femtocell base station so as to confirm that the fault has occurred, in which femtocell base stations are each connected via a respective interface (50) for wireline connection to the internet (52), the fault is loss of wireline connection, and one of the neighbours of the femtocell base station detected as possibly faulty receives information of the fault at its wireline interface and acts as a wireless backhaul bridge to the femtocell base station detected as faulty.

6. A femtocell base station according to claim 5, further comprising a processor (60) configured to coordinate among femtocell base stations that detect the fault so as to elect one of the femtocell base stations to treat the fault.

7. A femtocell base station according to claim 5 or claim 6, including a processor (60, 58) operative to treat the fault by diagnosis and/or remedy.

8. A femtocell base station according to any of claims 5 to 7, in which the femtocell base station comprises a fault management stage (60) for detection of faults inside the femtocell base station and an interface (50, 54) for indicating detection of a fault to one of its neighbouring femtocell base station for subsequent confirmation.

## Patentansprüche

1. Verfahren zum Bestimmen eines Fehlers in einer Basisstation (30) aus einer Gruppe von benachbarten Basisstationen, umfassend:
eine erste Basisstation, die eine möglicherweise fehlerhafte Operation einer Basisstation erkennt (Abb. 4:b);
wobei die erste Basisstation andere Basisstationen anweist (Abb. 4:d), die der Basisstation benachbart sind, die als möglicherweise fehlerhaft erkannt worden ist, diese Basisstation zu überwachen und mitzuteilen, ob sie ebenfalls den Fehler erkennen;
wenn mindestens einer der besagten Nachbarn ebenfalls den Fehler erkennt (Abb. 4:e) und dies mitteilt (Abb. 4:f), wird entscheiden, dass der Fehler bestätigt worden ist, wobei die erste Basisstation die Entscheidung trifft, dass der Fehler bestätigt worden ist, wobei die Basisstationen (30) Femtozellen-Basisstationen sind, wobei die Femtozellen-Basisstationen jeweils über eine entsprechende Schnittstelle (50) verbunden sind für eine drahtgebundene Verbindung mit dem Internet (52), wobei der Fehler im Verlust der drahtgebundenen Verbindung besteht, und wobei einer der Nachbarn der Femtozellen-Basisstation, die als möglicherweise fehlerhaft erkannt worden ist, Information über den Fehler an seiner drahtgebundenen Schnittstelle empfängt und als drahtlose Backhaul-Brücke fungiert für die Femtozellen-Basisstation, die als fehlerhaft erkannt wurde.

2. Verfahren nach Anspruch 1, weiterhin umfassend den Schritt des Anweisens (Abb.4:k) mindestens eines besagter Nachbarn zu versuchen, diesen Fehler zu beheben.

3. Verfahren nach Anspruch 1 oder 2, in welchem die Femtozelle, die als möglicherweise fehlerhaft erkannt wird durch die erste Basisstation, eine andere Femtozellen-Basisstation ist als die erste Femtozellen-Basisstation.

4. Verfahren nach Anspruch 1 oder Anspruch 2, in welchem die Femtozellen, die als möglicherweise fehlerhaft erkannt wird durch die erste Basisstation, besagte erste Femtozellen-Basisstation ist.

5. Femtozellen-Basisstation (30), umfassend eine Fehlermanagementstufe (60), die konfiguriert ist zum Bestimmen eines Fehlers in einer benachbarten Femtozellen-Basisstation und zum Empfangen von Information über den Fehler, wenn er von einer weiteren Femtozellen-Basisstation erkannt wird, die der für fehlerhaft angesehenen Femtozellen-Basisstation benachbart ist, um zu bestätigen, dass der Fehler aufgetreten ist, in welcher alle Femtozellen-Basisstationen jeweils verbunden sind über eine entsprechende Schnittstelle (50) für die drahtgebundene Verbindung mit dem Internet (52), wobei der Fehler im Verlust der drahtgebundenen Verbindung ist, und wobei der Nachbar der Femtozellen-Basisstation, die als möglicherweise fehlerhaft erkannt wird, Informationen empfängt über den Fehler an seiner drahtgebundenen Schnittstelle und fungiert als drahtlose Backhaul-Brücke zur Femtozellen-Basisstation, die als fehlerhaft erkannt worden ist.

6. Femtozellen-Basisstation nach Anspruch 5, weiterhin umfassend einen Prozessor (60), der konfiguriert ist zum Koordinieren der Femtozellen-Basisstationen, die den Fehler erkennen, um eine der Femtozellen-Basisstationen zum Behandeln des Fehlers auszuwählen.

7. Femtozellen-Basisstationen nach Anspruch 5 oder 6, einschließend einen Prozessor (60, 58), betreibbar zum Behandeln des Fehlers durch Diagnose und/der Reparatur.

8. Femtozellen-Basisstation nach einem beliebigen der Ansprüche 5 bis 7, in welcher die Femtozellen-Basisstation umfasst eine Fehlermanagementstufe (60) zum Erkennen von Fehlern im Innern der Femtozellen-Basisstation und eine Schnittstelle (50, 54) zum Anzeigen eines Fehlers in einer ihrer benachbarten Femtozellen-Basisstationen für die folgende Bestätigung.

## Revendications

1. Procédé de détection d'une panne dans une station de base (30) parmi un groupe de stations de base voisines comprenant :
une première station de base détectant (Figure 4:b) une panne éventuelle d'une station de base ;
la première station de base informant (Figure 4:d) d'autres stations de base, qui sont des voisines de la station de base détectée comme étant éventuellement défaillante, de surveiller cette station de base et de signaler si elles détectent également la panne ;
lorsqu'au moins une desdites voisines détecte également (Figure 4:e) la panne et la signale (Figure 4:f), il est décidé que la panne est confirmée,
dans lequel la première station de base prend la décision que la panne est confirmée, les stations de base (30) sont des stations de base femtocellulaires, les stations de base femtocellulaires sont chacune connectées par l'intermédiaire d'une interface respective (50) pour une connexion filaire à Internet (52), la panne est une perte de connexion filaire, et une des voisines de la station de base femtocellulaire détectée comme étant éventuellement défaillante reçoit des informations de la panne au niveau de son interface filaire et agit comme un pont de liaison sans fil vers la station de base femtocellulaire détectée comme étant défaillante.

2. Procédé selon la revendication 1, comprenant en outre l'étape consistant à informer (Figure 4:k) au moins une desdites voisines de tenter de résoudre cette panne.

3. Procédé selon la revendication 1 ou 2, dans lequel la femtocellule détectée comme étant éventuellement défaillante par la première station de base est une station de base femtocellulaire autre que la première station de base femtocellulaire.

4. Procédé selon la revendication 1 ou 2, dans lequel la femtocellule détectée comme étant éventuellement défaillante par la première station de base est ladite première station de base femtocellulaire.

5. Station de base femtocellulaire (30) comprenant une étape de gestion de panne (60) configurée en cours d'utilisation pour détecter une panne dans une station de base femtocellulaire voisine et pour recevoir des informations de la panne telle que détectée par une autre station de base femtocellulaire voisine de la station de base femtocellulaire présumée défaillante afin de confirmer que la panne s'est produite, les stations de base femtocellulaires étant chacune connectées par l'intermédiaire d'une interface respective (50) pour une connexion filaire à Internet (52), la panne est une perte de connexion filaire, et une des voisines de la station de base femtocellulaire détectée comme étant éventuellement défaillante reçoit des informations de la panne au niveau de son interface filaire et agit comme un pont de liaison sans fil vers la station de base femtocellulaire détectée comme étant défaillante.

6. Station de base femtocellulaire selon la revendication 5, comprenant en outre un processeur (60) configuré pour coordonner des stations de base femtocellulaires qui détectent la panne afin d'élire une des stations de base femtocellulaires pour traiter la panne.

7. Station de base femtocellulaire selon la revendication 5 ou 6, comprenant un processeur (60, 58) permettant de traiter la panne par un diagnostic et/ou résolvant la panne.

8. Station de base femtocellulaire selon l'une quelconque des revendications 5 à 7, la station de base femtocellulaire comprenant une étape de gestion de panne (60) pour détecter des pannes à l'intérieur de la station de base femtocellulaire et une interface (50, 54) pour indiquer la détection d'une panne à une de ses stations de base femtocellulaires voisines pour une confirmation ultérieure.
